# EUROPÄISCHE PATENTSCHRIFT

(11) **EP 0 912 385 B1**
(45) Veröffentlichungstag und Bekanntmachung des Hinweises auf die Patenterteilung: **29.03.2000**
(21) Anmeldenummer: 97926954.5
(22) Anmeldetag: 01.07.1997
(51) Int. Cl.: B62B 13/16

(54) **KLAPPBARER SCHLITTEN**
COLLAPSIBLE SLEDGE
LUGE PLIANTE

(30) Priorität: 15.07.1996 CH 177796
(43) Veröffentlichungstag der Anmeldung: 06.05.1999
(73) Patentinhaber: Schmid, Adolf, 8906 Bonstetten (CH)
(72) Erfinder: Schmid, Adolf, 8906 Bonstetten (CH)
(74) Vertreter: Münch, Otto, Dipl.-Ing.
(86) Internationale Anmeldenummer: CH9700259
(87) Internationale Veröffentlichungsnummer: WO9802341

(56) Entgegenhaltungen:
- CH-A- 424 495
- DE-A- 2 359 169
- FR-A- 1 091 190
- FR-A- 1 287 557
- GB-A- 930 527
- GB-A- 1 004 135

## Beschreibung

Aus der CH-A-424 495 ist ein klappbarer Schlitten bekannt. Er hat zwei Längsholme, welche über Stützen an zwei Kufen abgestützt sind und eine Sitzfläche tragen. Die Stützen sind um die Längsachse der Längsholme schwenkbar. In der ausgeschwenkten Lage der Kufen sind die Stützen durch aufschraubbare Querverbinder arretierbar. Die Kufen sind starr mit den Stützen verbunden. Die Längsholme sind durch Querstreben miteinander verbunden. Die eine Kufe ist auf die Oberseite, die andere auf die Unterseite der Sitzfläche schwenkbar. Die Querverbinder in ihrer Anordnung an den beiden Rahmenteilen ergeben keine verwindungssteife Einheit.

Aus der GB-A-1 004 135 ist ein weiterer klappbarer Schlitten bekannt. Bei diesem sind die Stützen mit Scharnieren an den Querstreben befestigt. Die Stützen mit den Kufen sind beide auf die Unterseite der Sitzfläche klappbar. Im ausgeklappten Zustand sind die Stützen mit kniehebelartigen Schrägstreben mit den Querstreben verbunden. Dieser Schlitten hat eine niedrige Sitzhöhe und eine geringe Bodenfreiheit, weil die Länge der Stützen geringer sein muss als die halbe Sitzbreite.

Der vorliegenden Erfindung liegt die Aufgabe zugrunde, einen klappbaren Schlitten anzugeben, der die obigen Nachteile vermeidet. Diese Aufgabe wird durch die Merkmalskombination der Ansprüche gelöst.

Nachfolgend wird ein Ausführungsbeispiel der Erfindung anhand der Zeichnungen erläutert. Darin zeigt:
- Figur 1: eine Seitenansicht, und

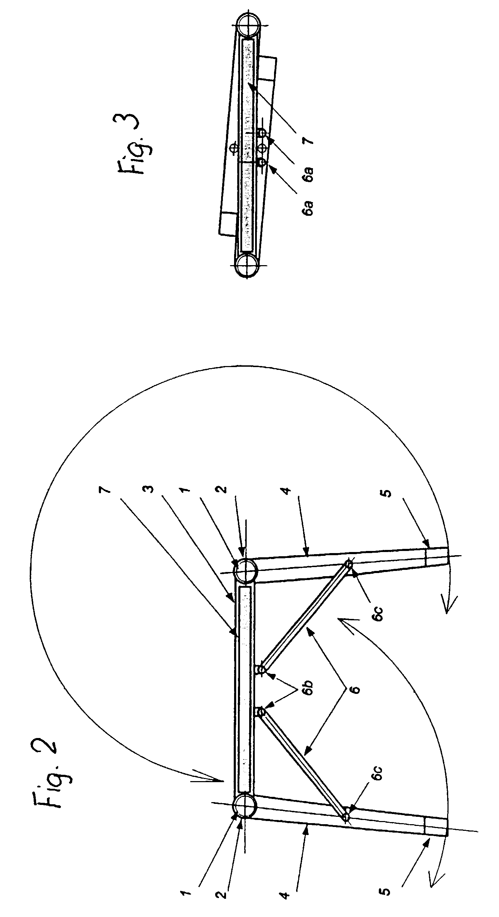

- Figuren 2 und 3: einen Querschnitt im aufgeklappten bzw. zusammengeklappten Zustand.

Der Schlitten hat zwei kreiszylindrische, geradlinige Rohre als Längsholme 1, welche durch drei Querstreben 3 starr miteinander verbunden sind. Zwischen den beiden Holmen 1 ist eine Sitzfläche 7 befestigt. Diese kann z.B. aus Textil, Kunststoff oder aus Holz bestehen. Sie erstreckt sich lediglich zwischen den hinteren beiden Querstreben 3. An zwei Kufen 5 sind je zwei Stützen 4 starr befestigt. Das den Kufen 5 abgewandte Ende der Stützen 4 sowie das Horn der Kufen 5 sind mittels Lagern 2 schwenkbar auf dem betreffenden Holm 1 gelagert. Die Lager 2 der Stützen 4 sind unmittelbar benachbart den Querstreben 3 ausserhalb der Sitzfläche 7. Im ausgeschwenkten Zustand sind die Stützen 4 durch Schrägstreben 6 mit den Querstreben 3 lösbar verbunden. Dazu sind die Streben 6 an ihrem oberen Ende mit einem kugel- oder sphärischen Gelenk 6b an den hinteren beiden Querstreben 3 und mit einer lösbaren Verbindung 6c, z.B. einer einschnappenden, lösbaren Steckverbindung mit den Stützen 4 verbunden.

Bei gelöster Verbindung 6c können die Streben 6 in die Lage 6a hochgeschwenkt werden. In dieser Lage können sie z.B. mittels Schnappelementen an der Sitzfläche 7 gehalten sein. Die beiden Kufen 5 mit den Stützen 4 können nun auf gegenüberliegende Seiten der Sitzfläche 7 geklappt werden. Damit hat der Schlitten ein kleines Transportvolumen. In der Gebrauchsstellung ist er stabil und hat gute Gleiteigenschaften.

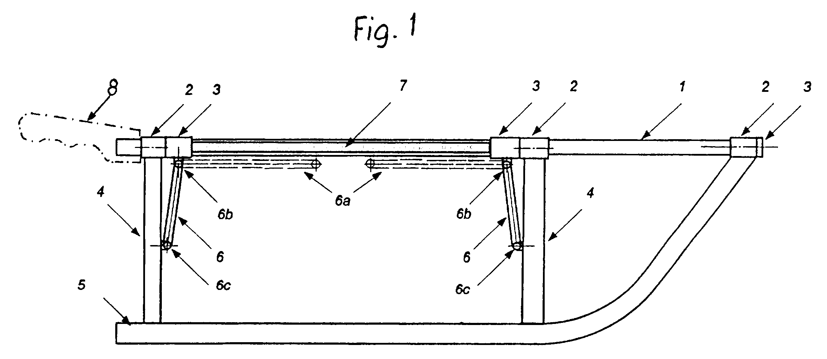

Am hinteren Ende der Längsholme 1 können noch Griffe 8 befestigt sein, die in Figur 1 strichpunktiert angedeutet sind und welche das Fahren mit dem Schlitten erleichtern. Alternativ zum beschriebenen Ausführungsbeispiel können die Stützen 4 und Kufenhörner auch starr mit den Längsholmen 1 verbunden, dafür die Querstreben 3 mit Lagern 2 auf den Holmen 1 schwenkbar sein.

## Patentansprüche

1. Klappbarer Schlitten mit zwei durch Querstreben (3) miteinander verbundenen Längsholmen (1), welche über Stützen (4) an zwei Kufen (5) abgestützt sind und eine Sitzfläche (7) tragen, wobei die Stützen (4) um die Längsachse der Längsholme (1) schwenkbar und mindestens in der ausgeschwenkten Lage der Kufen (5) arretierbar sind, wobei die Kufen (5) starr mit den Stützen (4) verbunden sind, und wobei die eine Kufe (5) auf die Oberseite, die andere auf die Unterseite der Sitzfläche (7) schwenkbar ist, dadurch gekennzeichnet, dass die Stützen (4) zur Arretierung durch Schrägstreben (6) mit zwei der Querstreben (3) lösbar verbunden sind.

2. Schlitten nach Anspruch 1, wobei die Längsholme (1) kreiszylindrische Rohre sind.

3. Schlitten nach Anspruch 1 oder 2, wobei die Schrägstreben (6) mit den Querstreben (3) gelenkig und mit den Stützen (4) lösbar verbunden sind.

4. Schlitten nach einem der Ansprüche 1 bis 3, wobei die Kufenhörner ebenfalls um die Achse der Längsholme (1) schwenkbar gelagert sind.

5. Schlitten nach einem der Ansprüche 1 bis 4, wobei die Längsholme (1) hinten frei abstehende Griffe (8) aufweisen.

6. Schlitten nach einem der Ansprüche 1 bis 5, wobei die Querstreben (3) starr mit den Längsholmen (1) verbunden und die Stützen (4) auf den Längsholmen (1) schwenkbar gelagert sind.

7. Schlitten nach einem der Ansprüche 1 bis 5, wobei die Stützen (4) starr und die Querstreben (3) schwenkbar mit den Längsholmen (1) verbunden sind.

## Claims

1. Collapsible sledge having two longitudinal bars (1), connected to each other by cross-struts (3), which are supported on two runners (5) via supports (4) and have a seat (7), wherein the supports (4) can be pivoted around the longitudinal axis of the longitudinal bars (1) and can be locked at least in the pivoted position of the runners (5), wherein the runners (5) are rigidly connected to the supports (4), and wherein once of the one runners (5) can be pivoted to the underneath and the other to the top of the seat (7), characterised in that the supports (4), for the locking, are releasably connected by means of slanting struts (6) to two of the cross-struts (3).

2. Sledge according to Claim 1, wherein the longitudinal bars (1) are circular cylinder tubes.

3. Sledge according to Claims 1 or 2, wherein the slanting struts (6) are pivotably connected to the cross-struts (3) and releasably connected to the supports (4).

4. Sledge according one of Claims 1 to 3, wherein the horns of the runners are also mounted pivotably around the longitudinal bars(1).

5. Sledge according to one of Claims 1 to 4, wherein the longitudinal bars (1) have at the back freely projecting grips (8).

6. Sledge according to one of Claims 1 to 5, wherein the cross-struts (3) are rigidly connected to and the supports (4) are pivotably mounted on the longitdinal bars (1).

7. Sledge according to one of Claims 1 to 5, wherein the supports (4) are rigidly and the cross-struts (3) are pivotably connected to the longitudinal bars (1).

## Revendications

1. Luge pliante ayant deux barres longitudinales (1), attachées l'une à l'autre par des soutiens transversals (3), qui, par le moyen de supports (4), reposent sur deux patins (5) et portent un siège (7), dans laquelle les supports (4) sont pivotable autour de l'axe longitudinale des barres longitudinales (1) et blocable au moins dans la position pivotée des patins (5), dans laquelle les patins (5) sont attachés de manière rigide aux supports (4), et dans laquelle l'un des patins (5) et pivotable vers le côté supérieur et l'autre vers le côté inférieur du siège (7), caractérisée en ce que les supports (4), pour le blocage, sont attachés, par des soutiens inclinés (6), de manière détachable à deux des soutiens transversals (3).

2. Luge pliante selon la revendication 1, dans laquelle les barres longitudinales (1) sont des tubes circulairs cylindriques.

3. Luge selon la revendication 1 ou 2, dans laquelle les soutiens inclinés (4) sont attachés de manière articulée aux soutiens transversals (3) et de manière détachable aux supports (4).

4. Luge selon une des revendications 1 à 3, dans laquelle les cornes des patins sont également montés de manière pivotable autour l'axe des barres longitudinales (1).

5. Luge selon une des revendications 1 à 4, dans laquelle les barres longitudinales (1) ont, à l'arrière, des manches (8) qui projettent librement.

6. Luge selon une des revendications 1 à 5, dans laquelle les soutiens transversales (3) sont attachés de manière rigide aux et les supports (4) sont montés de manière pivotable sur les barres longitudinales (1).

7. Luge selon une des revendications 1 à 5, dans laquelle les supports (4) sont attachés de manière rigide et les soutiens transversals (3) de manière pivotable aux barres longitudinales (1).
